# EUROPEAN PATENT APPLICATION

(11) **EP 0 967 788 A2**
(43) Date of publication of application: **29.12.1999**
(21) Application number: 99102528.9
(22) Date of filing: 10.02.1999
(51) Int. Cl.: H04N 1/41

(54) **Dynamic generation of multi-resolution and tile-based images from flat compressed images**

(30) Priority: 26.06.1998 US 105769
(71) Applicant: Hewlett-Packard Company, Palo Alto, California 94304 (US)
(72) Inventor: Nguyen, Hugh Phu, San Jose, California 95129 (US); Wong, Ping Wah, Sunnyvale, CA 94087 (US)
(74) Representative: Schoppe, Fritz, Dipl.-Ing.

(57) **Abstract**

The inventive mechanism (11) dynamically builds multi-resolution images from stored, compressed images (13). The inventive mechanism will operate with any type of compressed images, provided that the compressed files are in the transform domain, for example, JPEG images. The inventive mechanism uses a cache (19) to store the different resolution images as they are constructed. The multi-resolution images are generated by scaling the images, through the removal of the higher frequency coefficients from the blocks of data of the image. The different resolutions are divided into classes (22, 24) and scaling is performed only on the highest resolution image in each class. The inventive mechanism also structures the image data as tiles to support regional access of images. The tiles are formed by scanning the stored image and noting the starting point and ending point of each block of image data. The mechanism can then identify the blocks that are associated with the request, and process and deliver only that portion.

## Description

### TECHNICAL FIELD OF THE INVENTION

This application relates in general to image processing and in specific to a mechanism for generating multiple resolution images from compressed images.

### BACKGROUND OF THE INVENTION

With the advancement of desktop computer systems, digital images have become a generic data type. However, the images comprise large amounts of data. An international standard for color image compression known as JPEG emerged to fulfill the need of efficient storage and transmission of digital continuous-tone images. JPEG defines a standard algorithm for image compression that represents images with less data in order to save storage costs as well as transmission time and costs. JPEG has gained great popularity because it allows the interchange of images between diverse applications. However, applications normally exchange JPEG data streams as single-resolution images regardless of the target resolutions. For example, typical displays have resolutions of about 72 dots per inch (dpi), whereas typical printers can handle 300 - 1200 dpi or higher. Consequently, displaying a print resolution JPEG image is very inefficient. Furthermore, printing a display resolution JPEG image yields a very low quality output.

Another problem with JPEG is that accessing a local region of the image requires receiving and decoding of the whole image. For example, a satellite image is usually a very large image, and typically users only desire to view a scaled down portion of the image. Thus, the entire satellite image must be retrieved and then decompressed before any portion of the image can be viewed. Furthermore, the entire image must be transferred over a network, even if only a portion of the image is desired. This is highly undesirable in terms of transmission time and costs.

A prior art alternative solution is a multi-resolution format such as FlashPix, which is an image file format that supports multi-resolution images and provides fast local region access. FlashPix is discussed in Eastman Kodak Company, FlashPix Format Specification, version 1.0.1, July 1997, which is herein incorporated by reference. The FlashPix files can contain multiple resolutions in the same storage file, meaning that it stores different resolutions of the image, from a small version to a large version of the image in the same file. For example, a file may contain the original image, a ½ scaled down version, ¼ scaled down version, and a ⅛ scaled down version. When a user requests a particular sized version or a particular resolution version, FlashPix will send the closest stored version to the request. Thus, FlashPix will not dynamically create other versions, but rather will only send the closest available version. FlashPix also provides fast access to file resident image data by organizing the image data as tiles. The image is divided into different tiles, which can be individually accessed. Thus, a user may view a portion of the image without having to retrieve the entire image. A problem with this solution is that the multi-resolution format requires a large amount of storage space to hold the multiple resolutions.

Consequently, the prior art offers mechanisms which have trade offs in terms of performance and costs. The JPEG format, as well as other flat image formats require little storage space but do not offer multiple resolutions. Multi-resolution formats such as FlashPix provides multiple resolution images, but requires a large amount of storage space.

Therefore, there is a need in the prior art for a mechanism which provides multiple resolution images, but does not require a large amount of storage space. The mechanism should also allow a user to access a portion of the image without having to retrieve the entire image.

### SUMMARY OF THE INVENTION

These and other objects, features and technical advantages are achieved by a system and method which uses a mechanism that builds multi-resolution images dynamically from flat images. This eliminates the extra storage requirements associated with storing images, while providing different resolutions on demand. The inventive mechanism will operate with any type of compressed images, provided that the compressed files are in the transform domain, for example, JPEG images. The inventive mechanism uses a cache to store the different resolution images as they are constructed. The cache allows for quick zooming operations, as well as thumbnail generation.

Image scaling is performed by removing higher frequency coefficients from the blocks of data of the image. The scaling is performing only on certain resolution images. The different possible resolutions are divided into classes. Scaling is performed only on the highest resolution image in each class. The highest resolution image of a particular class is formed from the highest resolution image of the preceding higher resolution class. The resolutions in each class are determined by the block size used to store the image data.

The inventive mechanism also structures the image data as tiles to support regional access of images. The inventive mechanism forms tiles from the compressed images. Thus, mechanism allows for the generation of portions of images of an original image. This will improve operating speeds as the entire image does not have to be processed. Furthermore, transmission speeds will be improved as the entire image does not have to be sent over transmission lines. The tiles are formed by scanning the stored image and noting the starting point and ending point of each block of image data. The mechanism can then identify the blocks that are associated with the request, and process and deliver only that portion.

Therefore, it is a technical advantage of the present invention to dynamically create multi-resolution images from a stored compressed image that has block based data.

It is another technical advantage of the present invention that image tiles can be created from the stored compressed image.

It is a further technical advantage of the present invention that the different resolutions are separated into classes, and that each resolution of a class is formed from the highest resolution of the class.

The foregoing has outlined rather broadly the features and technical advantages of the present invention in order that the detailed description of the invention that follows may be better understood. Additional features and advantages of the invention will be described hereinafter which form the subject of the claims of the invention. It should be appreciated by those skilled in the art that the conception and the specific embodiment disclosed may be readily utilized as a basis for modifying or designing other structures for carrying out the same purposes of the present invention. It should also be realized by those skilled in the art that such equivalent constructions do not depart from the spirit and scope of the invention as set forth in the appended claims.

### BRIEF DESCRIPTION OF THE DRAWINGS

For a more complete understanding of the present invention, and the advantages thereof, reference is now made to the following descriptions taken in conjunction with the accompanying drawings, in which:
FIGURE 1 depicts a schematic view of the inventive mechanism in its operating environment; and
FIGURE 2 depicts a schematic view of the resolution paths followed by the inventive mechanism.

### DETAILED DESCRIPTION OF THE INVENTION

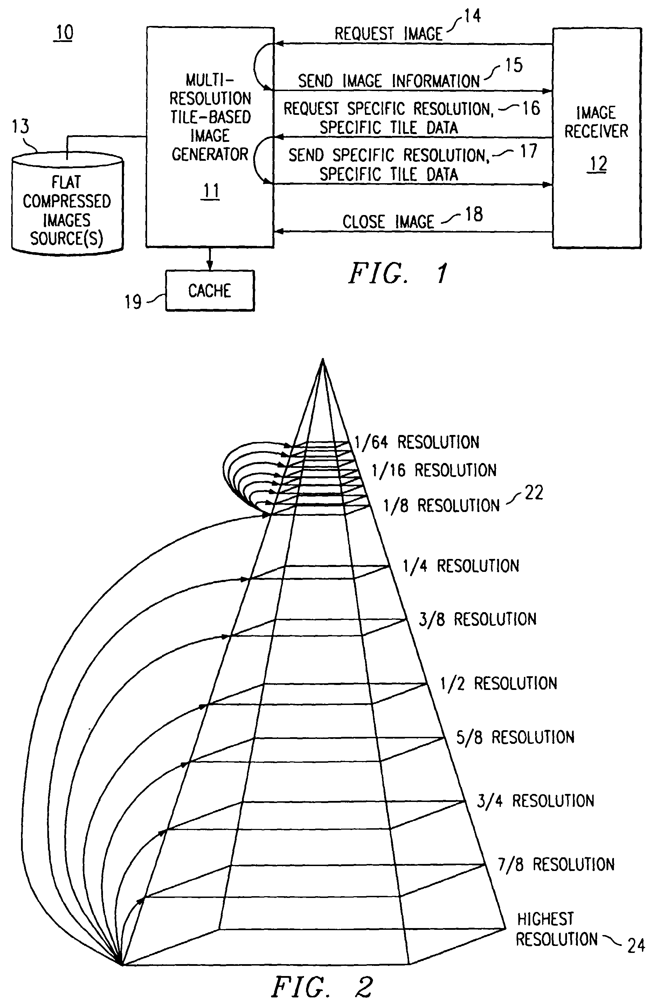

FIGURE 1 depicts the inventive mechanism in an operational environment 10. The inventive multi-resolution image generator 11 is shown communicating with an image receiver 12. In a network implementation, the generator 11 would comprise a server and the receiver would be a client of the server. Thus, the receiver 12 could be an internet user or an intranet user. Note that more than one receiver 12 could be connected to the generator 11. The generator 11 manages the flat compressed images stored in media 13, and provides multi-resolution, tile-based data to the receiver 12 on demand. Note that more than one storage media could be connected to the generator. Further note that the storage media could comprise a hard disk, a CD (or CD library), or other mass storage mechanism, as well as a connection to an image network.

The operational environment shown in FIGURE 1 depicts the interaction of the generator 11 and the receiver 12. The receiver would initiate communications by requesting an image 14 from the generator 11. Note that such a request could come to the generator 11 via a LAN, WAN, or the internet. The generator 11 responds by reading the requested image and returning image information 15, such as the image dimension or even the image itself. During this process, the generator 11 builds an internal data structure to hold extra information about the flat image and stores the structure in the cache 19. Note that the cache could be part of the generator 19 or part of a computer system upon which the generator is resident. The receiver 12 may request the image data to have a specific resolution and/or a specific tile 16. The generator 11 then dynamically constructs the image data and returns the specified data 17 to the receiver 12. The receiver then may request more image data 14 or specific format data 16 of the same image file, or the receiver closes the image file 18, which causes the generator to dump the internal data structure from the cache 19.

FIGURE 2 is a graphical depiction of paths used in multi-resolution image generation or image scaling. The flat image is the highest resolution image 21 that is used to construct smaller resolution images. The flat image is stored in the storage media 13. Note that it is possible to construct a higher resolution image than the flat image itself from the flat image. However, this construction can be more efficiently performed by the receiver 12 to conserve bandwidth. If the inventive image generator 11 is to be used in a PC based system, then higher resolution construction can occur because the receiver 12 would comprise the generator 11. Note that upscaling could be performed by inserting zeros into the coefficients of the data block.

The flat images are block based compressed images with the image data in the transform domain. For example, JPEG image data is arranged in 8x8 blocks, and the data is in the discrete cosine transform (DCT) domain. The JPEG format is discussed in JPEG Still Image Data Compression Standard, by W.B. Pennebaker and J.L. Mitchell, Van Nostrand Reinhold, New York, New York, 1993, which is herein incorporated by reference. Note that any data format can be used as long as the images are block based with the data in the transform domain. Further note that blocks are different from tiles. Whereas each tile represents a discrete area of the image, each block contains data that has been mingled with data from surrounding blocks, and thus each block does not represent a discrete area of the image. Note that since the data is compressed, storage requirements, data transmission time, and data transmission requirements are reduced.

Scaling is performed by removing higher frequency coefficients from the blocks of data. For example, an image can be reduced to ⅞ the size of the original image by removing the last row and last column of DCT data from each JPEG 8x8 block of the image, which is the higher frequency data. When the 7x7 blocks of DCT data are decoded by performing an inverse transform, the resulting image is ⅞ the size of the original image. By removing additional rows and columns of data, resolutions of ⅛, ¼, ⅜, ½, ⅝, and ¾ can be obtained. For example to form a ⅛ resolution image, 7 rows and 7 columns are removed, leaving the lowest frequency coefficient. The concept of scaling by removing the higher frequency data is discussed in "Adaptive Motion Vector Resampling for Compressed Video Down-Scaling," by B. Shen, I.K. Sethi, and V. Bhaskaran, IEEE International Conference on Image Processing, vol. 1, pp. 771-774, 1997, which is herein incorporated by reference.

Note that multiple paths can be taken to any particular resolution. For example, a ⅛ resolution image may be formed from a path of a ½ image of a ½ image of a ½ image. Similarly, either a ¼ image of a ½ image, or a ½ image of a ¼ image, will also form a ⅛ resolution image. However, each image formation results in the loss of data, thus the more intermediate images, the more data that is lost. The data is stored via a floating point number, and thus each time a scaled image is formed, the number is truncated. In JPEG the data is stored as an integer, and the truncation is known as quantization. Quantization is more severe than simple rounding, for example, a value of 13 may be assigned either 8 or 15. Quantization results from the compression of data associated with JPEG. Thus, every time a JPEG image is created, data is lost. Also note that the higher frequency coefficients, i.e. those toward the upper left, have less quantization than the lower frequency coefficients, i.e. those toward the lower right. Since the scaling removes the higher frequency coefficients, the most accurate data is lost. In JPEG, the quantization is determined from a table.

The inventive generator 11 uses the paths shown in FIGURE 2 for JPEG format. For any format, let n be the smallest downscaling factor that can be achieved in one scaling step. In the JPEG example shown in FIGURE 2, n would be ⅛, as the smallest factor of an 8x8 block is ⅛. The generator 11 would then scale to any resolution between 1/nⁱ and 1/nⁱ⁺ⁱ from the resolution 1/nⁱ. FIGURE 2 shows the example from JPEG downscaling paths. The ⅞, ¾, ⅝, ½, ⅜, ¼ and ⅛ resolutions must be constructed from the 8/8 resolution or the flat image 21. The 7/64, 3/32, 5/64, 1/16, 3/64, 1/32, and the 1/64 resolutions must be constructed from the ⅛ resolution 22. The 1/64 would become the highest resolution image for use in the formation of image resolutions down to 1/512 resolution. This pattern can be replicated until a single pixel is reached. Thus, each resolution has a unique path. Note that the path to a particular resolution is the shortest, and thus the scaled down image or thumbnail image can be constructed quickly. Therefore the inventive generator 11 is useful in internet situations where the receiver 12 usually requests the thumbnail image before requesting higher resolution images. Note that a class of resolutions comprises all resolutions that can be constructed from the highest resolution of a class. For example, the 8/8 class includes 8/8, ⅞, ¾, ⅝, ½, ⅜, ¼ and ⅛ resolutions, while the ⅛ class would include ⅛, 7/64, 3/32. 5/64, 1/16, 3/64, 1/32, and the 1/64 resolutions. Note that the ⅛ resolution is in two classes, as the ⅛ resolution image can be created from 8/8 image and itself, however, only one ⅛ image would be stored in the cache 19.

The inventive generator 11 also produces tiles from the stored JPEG flat image. The inventive generator 11 fetches the requested image, which is stored in a compressed, transformed format. The generator then scans through the image to mark the beginning and end of each 8x8 block. Note that scanning involves decoding of the compressed image, but not retrieval of the uncompressed image. The beginning and end points of the blocks are stored in the cache 19. If the viewer or receiver 12 requests a particular portion of the image, then the particular blocks with that location are selected. These blocks are then scaled to the appropriate resolution, according to the mechanism of FIGURE 2. The scaled blocks are then decoded or decompressed and sent to the viewer or receiver 12.

The cache 19 maintains entries of the various resolutions of the image as specified by the receiver 12. The cache 19 is tile-based, that is one entry per tile, with each tile comprising at least one block of image data. Note that the cache stores the scaled, compressed data, not the decoded data. The cache scheduler (not shown) would form separate pools of resolutions, with one pool for each of the 1/nⁱ classes of resolutions. For example, one pool for the 8/8 class, which has resolutions of 8/8 to ¼, and a second pool for the ⅛ class, which as resolutions of ⅛ to 1/32. Note that in this instance the ⅛ resolution is stored in the second class. However, the scheduler could store the ⅛ resolution in the first class. The highest resolution tile for each class is maintained within the cache as it is created, e.g. ⅛ or 1/64. These tiles have a higher precedence over the remaining resolutions within each class with regards to cache space, as well as discard order. The highest resolution from higher classes has precedence over that from the lower classes. All the remaining resolutions from all classes would preferably be maintained by the scheduler according to a Least Recently Used (LRU) mechanism although other mechanisms might be employed.

In many situations, the receiver 12 requests adjacent resolutions to perform zooming. Thus, the inventive generator 11 responds quickly to zooming requests, because the tiles needed to build the new resolutions are likely to reside in the cache. For example, if the receiver zooms by moving from the 1/32 resolution to the 1/16 resolution of the JPEG image, then the tiles needed to build the 1/16 resolution are those from the ⅛ resolution. These tiles are already in cache, because they are used to build the 1/32 resolution.

Although the present invention and its advantages have been described in detail, it should be understood that various changes, substitutions and alterations can be made herein without departing from the spirit and scope of the invention as defined by the appended claims.

## Claims

1. A method for building a plurality of multi-resolution images from an original image (24), the method comprising the steps of:
receiving a request (14) for a particular resolution output image of the original image from a user (12);
determining a resolution class (22, 24) to which the request pertains; and
generating the output image (17) from the highest resolution in the resolution class.

2. The method of claim 1, wherein:
the resolution class (24, 22) includes resolutions having the values of Z/nⁱ⁺ⁱ;
wherein Z equals whole numbers from 1 to n, is a value related to a format of the original image, and i is a whole number.

3. The method of claim 1 wherein the original image is in a block based and compressed format, and the step of generating comprises the steps of:
scaling an image (24, 22) having the highest resolution in the resolution class; and
decoding the scaled image to form the output image.

4. The method of claim 3 wherein the request identifies a portion of the original image, the step of generating further comprises the steps of:
scanning the original image (24);
recording a start location and an end location for each block of the original image into a cache (19);
designating the blocks that form the portion as a tile; and
performing the steps of scaling and decoding on the tile.

5. The method of claim 4, further comprising the steps of:
storing the image (22, 24) having the highest resolution into a cache (19); and
storing the scaled image into the cache.

6. The method of claim 5, wherein the step of scaling comprises the steps of:
removing a particular number of rows of data from at least one block of the highest resolution image; and
removing a particular number of columns of data from at least one block of the highest resolution image.

7. The method of claim 6, wherein:
the data is transform data; and
the transform data removed by the steps of removing is the highest frequency data in the one block.

8. A mechanism (11) for building a plurality of multi-resolution images from an original image, the mechanism comprising:
means for receiving a request (14) for a particular resolution output image of the original image from a user;
means for determining a resolution class (23, 24) to which the request pertains; and
means for generating the output image (17) from the highest resolution in the resolution class.

9. The mechanism of claim 8, wherein:
the resolution class (22, 24) includes resolutions having the values of Z/nⁱ⁺ⁱ;
wherein Z equals whole numbers from 1 to n, is a value related to a format of the original image, and i is a whole number.

10. The mechanism of claim 8, wherein:
the format of the original image (24) is a JPEG format; and
n is a block size of 8.
